Europäisches Patentamt

European Patent Office

Office européen des brevets

(19)

(11) Veröffentlichungsnummer: **0 366 947**

**A1**

(12) # EUROPÄISCHE PATENTANMELDUNG

(21) Anmeldenummer: 89118204.0

(22) Anmeldetag: 30.09.89

(51) Int. Cl.⁵: **B01D 29/27 , C25D 13/24 , B01D 15/00 , B01D 17/00**

(30) Priorität: 31.10.88 DE 3836973

(43) Veröffentlichungstag der Anmeldung:
**09.05.90 Patentblatt 90/19**

(84) Benannte Vertragsstaaten:
**ES**

(71) Anmelder: **BASF Lacke + Farben Aktiengesellschaft**
**Max-Winkelmann-Strasse 80**
**D-4400 Münster(DE)**

(72) Erfinder: **Nabel, Heinz**
**Schemmstrasse 5**
**D-4410 Warendorf 2(DE)**
Erfinder: **Brücken, Thomas, Dr.**
**Grüner Weg 73**
**D-4400 Münster(DE)**

(74) Vertreter: **Leifert, Elmar, Dr.**
**BASF Lacke + Farben AG Patentabteilung**
**Max-Winkelmann-Strasse 80 Postfach 61 23**
**D-4400 Münster(DE)**

(54) **Filter zur Entfernung von hydrophoben Substanzen aus Elektrotauchlacken.**

(57) Filter für Elektrotauchlacke

Durch die Anwesenheit von hydrophoben Substanzen in Elektrotauchlacken können Oberflächenstörungen in Form von Kratern im eingebrannten und/oder überlackierten Eletrotauchlackfilm auftreten.

Um diese hydrophoben Substanzen aus dem Elektrotauchlack zu entfernen, wird ein Filter vorgeschlagen, das im wesentlichen eine Spiralfilterpatrone (7) aufweist, die aus einem Adsorptionsvlies (5) besteht, wobei dieses Adsorptionsvlies zusätzlich durch ein grobmaschiges Kunststoffstütznetz (6) hinsichtlich seiner mechanischen Festigkeit ergänzt sein kann.

EP 0 366 947 A1

## Filter zur Entfernung von hydrophoben Substanzen aus Elektrotauchlacken

Die Erfindung bezieht sich auf ein Filter zur Entfernung von hydrophoben Substanzen gemäß dem Oberbegriff des Hauptanspruches.

Durch die Anwesenheit von hydrophoben Substanzen, deren Oberflächenspannung kleiner als 35 mN/m beträgt, z. B. Tiefziehfette, Kohlenwasserstofföle, Siliconverbindungen, perfluorierte Verbindungen usw. in Elektrotauchlacken kann es zu Oberflächenstörungen der zu behandelnden Werkstücke kommen, z. B. in Form von Kratern im eingebrannten und/oder überlackierten Elektrotauchlackfilm. Diese Probleme verursachenenden Substanzen können sowohl in der Lackphase dispergiert sein als auch auf der Lackoberfläche eines Elektrotauchlackbeckens schwimmen. Es müssen also Vorkehrungen getroffen werden, um diese störenden Substanzen zu entfernen.

Bisher hat man versucht, durch offene und auch geschlossene Filtration über Glasfasern zumeist chargenweise, d.h. durch Umpumpen des Inhaltes des Elektrotauchlackbeckens in einen Gegenbehälter und zurück, diese, Probleme verursachenden Stoffe zu entfernen. Hierbei tritt der Nachteil auf, daß nur ein geringer Durchfluß möglich ist und die eingesetzten Filter blockieren und zusätzliche Filtereinrichtungen notwendig werden. Die bisher bekannten Verfahren sind arbeitsintensiv und bedeuten einen Produktionsausfall.

Aus der DE-C1 36 17 995 ist ein Verfahren zur Entfernung silicon- oder polymerer fluorkohlenstoffhaltiger Verunreinigungen aus wässrigen Emulsionen oder Dispersionen bekannt, wobei vorgeschlagen wird, daß die wässrige Emulsion oder Dispersion durch feinverteilte Silikate Sand, Kieselgur, Kieselgel oder Quarz filtriert wird. Der Aufbau einer solchen Filtereinrichtung wird in dieser Literaturstelle nicht beschrieben.

Aus der gattungsbildenden DE-33 43 881 A1 ist ein Filtereinsatz für einen Flüssigkeitsfilter bekannt, der im wesentlichen aus einem flüssigkeitsdurchlässigem Stützrohr besteht, wobei auf diesem Stützrohr eine Filterpatrone aufgeschoben ist. Diese Filterpatrone weist im Inneren einen netzartigen zylindrischen Rahmen auf, der von einer Faserpackung umgeben ist. Durch eine solche Anordnung ist es nicht möglich, die in Elektrotauchlacken u. U. vorkommenden hydrophoben Substanzen und Feststoffe in einer produktionstechnisch zufriedenstellenden Weise abzuscheiden.

Der Erfindung liegt die Aufgabe zugrunde, Fette, Öle, Silicone und perfluorierte Verbindungen sowie Feststoffe aus Elektrotauchlacken zu entfernen, ohne daß dabei Produktionsstörungen durch häufiges Zusetzen der Filtereinrichtungen befürchtet werden müssen.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird ein Filter vorgeschlagen, das ggf. mit weiteren Anlagen, wie Ultrafiltration, Wärmetauscher usw. kombiniert werden kann. Um den Lackdurchfluß nicht zu stark zu reduzieren, wird ein spiralmodulförmiger Filtertuchkörper eingesetzt, in dem ein etwa 2 m großes Polypropylenvlies u. U. doppellagig aufgewickelt und in einem entsprechenden Nadelfilzbeutel untergebracht wird. Zwecks Verbesserung der mechanischen Stabilität des Polypropylenvliesfiltertuchkörpers kann die Vliesbahn zusammen mit einem grobmaschigen Kunststoffnetz um ein gelochtes Stützrohr aufgewickelt werden. Die Praxis hat gezeigt, daß Wechsel dieser Filtermodule oder Filterpatronen nur ein- bis zweimal pro Woche notwendig sind.

Flockenförmige Polypropylenfasern oder auch Glasfasern können zwischen der eigentlichen Spiralfilterpatrone und dem Filterbeutel untergebracht werden, um eine Blockade des Filterbeutels zu vermeiden.

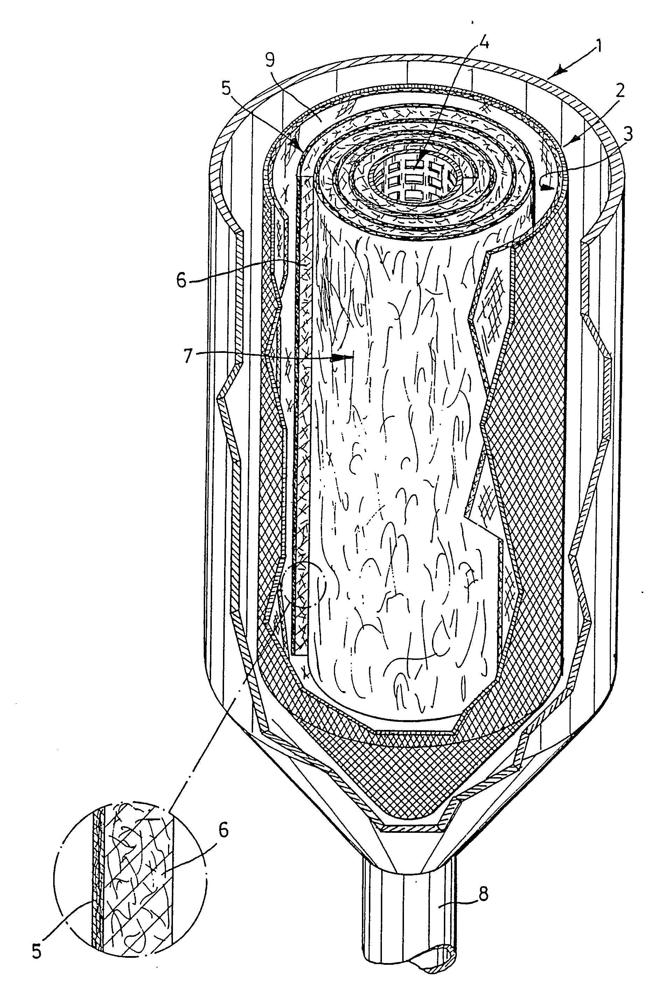

Ein Ausführungsbeispiel der Erfindung wird nachfolgend anhand der Zeichnung erläutert.

In der Zeichnung ist rein schematisch teilweise aufgeschnitten ein Filter dargestellt, wobei in einer herausgezogenen Darstellung das Adsorptionsvlies mit seinem Stützgitter deutlicher erkennbar ist.

In der Zeichnung ist ein Gehäuse 1 eines Filters gezeichnet, wobei bei 8 der Abfluß dieses Filtergehäuses 1 erkennbar ist. Der im oberen Bereich vorgesehene Zufluß ist aus Übersichtlichkeitsgründen nicht dargestellt und das durch das Gehäuse 1 geführte Medium fließt von oben in Längsachse des Gehäuses 1 nach unten und durchdringt dabei eine in dem Gehäuse 1 untergebrachte Filterpatrone 7 quer zu der vorbeschriebenen Längsachse.

Innerhalb des Gehäuses 1 ist ein Stützkorb 2 vorgesehen, der auf seiner Innenseite einen Filterbeutel 3 trägt, der als Nadelfilzfilter- oder Monofilamentbeutel ausgebildet ist und die Aufgabe hat, Feststoffpartikelchen zurückzuhalten.

Im Inneren des Gehäuses 1 ist weiterhin zentral ein mit Durchflußöffnungen versehenes Stützrohr 4 vor gesehen, um das eine Filterpatrone 7 angeordnet ist. Diese Filterpatrone 7 besteht im wesentlichen aus einem Stützgitter 6 und einem Adsorptionsvlies 5, wobei das Adsorptionsvlies 5 aus Polypropylenfasern oder Glasfasern gebildet sein kann. Hierbei kann, was aus der Zeichnung nicht zu erkennen ist, das Adsorptionsvlies 5 auch doppel- oder mehrlagig aufgebracht werden. Das Stützgitter 6 besteht aus einem grobmaschigen Kunststoffnetz, vorzugsweise Fasergebilde, das lediglich die Aufgabe der mechanischen Stützung des Adsorptionsvlieses 5 hat, dabei aber gleichzeitig, da es in Strömungsrichtung vor dem Adsorptionsvlies 5 liegt, ein Zurückhalten von groberen Verunreinigungen bewirkt.

Wie aus der Zeichnung erkennbar, ist zwischen der Spiralfilterpatrone 7 und der Innenseite des Filterbeutels 3 ein Raum 9 vorhanden. Dieser Raum 9 kann zusätzlich mit Filterwerkstoffen ausgefüllt sein.

Durch den Einsatz des vorbeschriebenen Filters und den Einsatz der in Verbindung mit dem Filter angewandten Stoffe, wird ein sicheres Entfernen von Fetten, Ölen, Siliconen und/oder perfluorierten Verbindungen sowie Feststoffen aus Elektrotauchlacken erreicht, so daß Oberflächenstörungen in Form von Kratern im eingebrannten oder überlackierten Elektrotauchlackfilm nicht mehr auftreten können.

## Ansprüche

1. Filter mit einer in einem Filtergehäuse (1) angeordneten Filterpatrone (7), die aus einem Stützrohr (4) besteht, auf dessen Außenseit eine ein Stützgitter (6) aufweisende Faserpackung angeordnet ist und die Hauptdurchflußrichtung in Längsachse des Gehäuses (1) ausgerichtet ist, aber die Flüssigkeit die Filterpatrone (7) im wesentlichen quer zur Längsachse durchströmt, dadurch gekennzeichnet, daß zur Entfernung von hydrophoben Substanzen aus Elektrotauchlacken,

a) die Faserpackung als Adsorptionsvliesbahn (5) ausgebildet ist,

b) das Stützgitter (6) aus einem grobmaschigen Kunststoffnetz besteht,

c) die Adsorptionsvliesbahn (5) in Strömungsrichtung gesehen auf der Rückseite des Stützgitters (6) angeordnet ist,

d) das Stützgitter (6) und die Adsorptionsvliesbahn (5) spiralförmig um das Stützrohr (4) aufgewickelt sind,

e) die Durchströmungsrichtung vom Inneren des Stützrohres (6) nach außen gerichtet ist,

f) innerhalb des Gehäuses (1) die Filterpatrone (7) im Abstand umgebend ein Stützkorb (2) mit einem Filterbeutel (3) für Feststoffpartikel angeordnet ist, wobei der Filterbeutel (3) in Durchflußrichtung des Filters gesehen auf der Innenseite des Stützkorbes (3) angeordnet ist.

2. Filter nach Anspruch 1, dadurch gekennzeichnet, daß der Filterbeutel (3) als Nadelfilzbeutel ausgebildet ist.

3. Filter nach Anspruch 1, dadurch gekennzeichnet, daß der Filterbeutel (3) als Monofilament-Kunststoffnetz ausgebildet ist.

4. Filter nach Anspruch 1, 2 oder 3, dadurch gekennzeichnet, daß das Stützgitter (6) aus einer grobmaschigen Fasermatte besteht.

5. Filter nach einem oder mehreren der vorhergehenden Ansprüche, dadurch gekennzeichnet, daß zwischen der Außenseite der Filterpatrone (7) und der Innenseite des Filterbeutels (3) flockenförmige Polypropylenfasern eingefüllt sind.

6. Filter nach einem oder mehreren der vorhergehenden Ansprüche, dadurch gekennzeichnet, daß die Adsorptionsvliesbahn (5) durch ein Polypropylenvlies gebildet ist.

7. Filter nach einem oder mehreren der vorhergehenden Ansprüche 1 bis 5, dadurch gekennzeichnet, daß die Adsorptionsvliesbahn (5) durch ein Glasfaservlies gebildet ist.

8. Filter nach einem oder mehreren der vorhergehenden Ansprüche, dadurch gekennzeichnet, daß die Adsorptionsvliesbahn (5) ein- oder mehrlagig auf dem Stützgitter (6) angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 703 016 (BASF LACKE + FARBEN AG) * Zusammenfassung; Patentansprüche 1,2; Seite 2, Zeilen 11-20; Seite 3, Zeilen 13-32; Seite 5, Zeilen 1-9 * --- | 1,5 | B 01 D 29/27 C 25 D 13/24 B 01 D 15/00 B 01 D 17/00 |
| A | DE-A-2 645 634 (WHATMAN REEVE ANGEL LTD.) * Patentansprüche 1,2,7,11,13,14,17-19,21,29,31; Seite 18, Zeilen 13-18; Seite 20, Zeile 8 - Seite 21, Zeile 7; Seite 16, Zeilen 2-13; Seite 22, Zeilen 15-18; Beispiel 6; Fig. 1-4 * --- | 1,4,7,8 | |
| A | US-A-3 063 888 (H.H. HOWARD) * Patentanspruch 1; Fig. 1,3,8 * --- | 1,7,8 | |
| A | US-A-2 725 986 (H.E. MARVEL) * Insgesamt * --- | 1 | |
| A | US-A-2 800 232 (H.E. MARVEL) * Insgesamt * --- | 1 | RECHERCHIERTE SACHGEBIETE (Int. Cl.5) |
| A | FR-E- 3 011 (L. TOTTEREAU) * Insgesamt * ----- | 1 | B 01 D C 25 D |

Der vorliegende Recherchenbericht wurde für alle Patentansprüche erstellt

| Recherchenort | Abschlußdatum der Recherche | Prüfer |
|---|---|---|
| DEN HAAG | 17-01-1990 | HOORNAERT P.G.R.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument